# FASCICULE DE BREVET EUROPEEN

(11) **EP 0 388 584 B1**
(45) Date de publication et mention de la délivrance du brevet: **27.10.1993**
(21) Numéro de dépôt: 90100715.3
(22) Date de dépôt: 15.01.1990
(51) Int. Cl.: G01D 5/20, G01P 3/48

(54) **Dispositif de repérage de position d'un arbre en acier en rotation comportant une piste formée par une bande à propriétés électriques discontinues et procédé de fabrication de ladite piste**
Vorrichtung zur Ermittlung der Lage einer mit einem elektrisch diskontinuierlich leitenden Band umgebenen rotierenden Stahlwelle sowie Verfahren zur Herstellung des Bandes
Device for determining the position of a steel shaft comprising an electrically discontinuous band and procedure for manufacturing said band

(30) Priorité: 17.01.1989 FR 8900492
(43) Date de publication de la demande: 26.09.1990
(73) Titulaire: GEC ALSTHOM SA, 75116 Paris (FR)
(72) Inventeur: Thibaud, Marc, F-95230 Soisy-Sous-Montmorency (FR)
(74) Mandataire: Weinmiller, Jürgen

(56) Documents cités:
- EP-A- 0 108 950
- DE-A- 2 300 784

## Description

La présente invention concerne un dispositif de repérage de position d'un arbre en acier en rotation comportant un capteur à courants de FOUCAULT devant lequel défile une piste solidaire de l'arbre comprenant des discontinuités influençant le capteur.

Il est connu d'utiliser une piste dans laquelle les discontinuités sont constituées par des accidents géométriques créés sur la périphérie de l'arbre (trous, cannelures, ergots).

Mais l'usinage de telles discontinuités est onéreux.

Il est également connu (DE-A-3109586) d'utiliser une piste solidaire de l'arbre constituée par une bande en isolant comportant des surfaces en matière non ferromagnétique avec bonne conductivité électrique, lesdites surfaces étant régulièrement réparties autour de l'arbre.

Dans le dispositif connu, les surfaces en matière non ferromagnétique sont disposées sur la bande en isolant du côté opposé à l'arbre.

L'inventeur a constaté qu'en disposant les surfaces en matière non ferromagnétique du côté de l'arbre, c'est-à-dire en les disposant le plus près possible de l'arbre en acier, on obtenait une augmentation du signal.

De plus la bande en isolant assure ainsi la protection des surfaces en matière non ferromagnétique.

Dans le dipositif conforme à l'invention, la piste solidaire da l'arbre est constituée par une bande en isolant, comportant des surfaces en matière non ferromagnétique avec bonne conductivité électrique, lesdites surfaces étant régulièrement réparties autour de l'arbre, la bande étant collée du côté pourvu des surfaces en matière non ferromagnétique sur l'arbre avec les surfaces disposées voisines de l'arbre.

L'invention a également trait à un procédé de fabrication d'une piste ayant des surfaces en matière non ferromagnétique sur un arbre en acier. On fabrique une bande munie de surfaces en matière non ferromagnétique réparties régulièrement et on colle sur l'arbre cette bande avec les surfaces en matière non ferromagnétique tournées vers l'arbre.

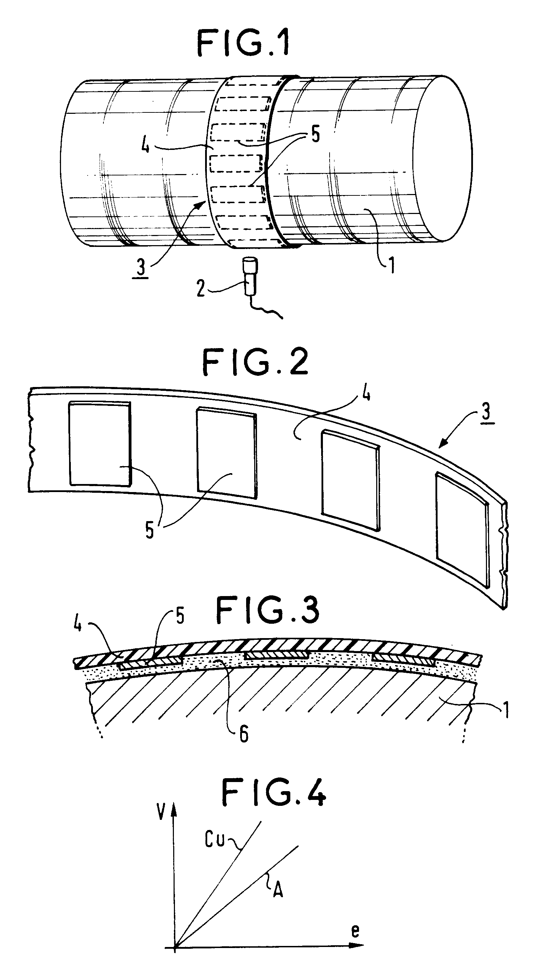

La présente invention sera mieux comprise à la lumière de la description dans laquelle la figure 1 représente le dispositif de repérage selon l'invention.

La figure 2 représente une bande servant à faire la piste selon l'invention.

La figure 3 représente la piste de la figure 2 collée sur l'arbre.

La figure 4 représente les courbes de réponse des capteurs à courants de FOUCAULT en présence de cuivre et d'acier.

Le dispositif de repérage (figure 1) de position d'un arbre en acier 1 comporte un capteur 2 à courants de FOUCAULT devant lequel défile une piste 3 constituée par une bande 4 munie de surfaces 5 en matière non ferromagnétique, de préférence en cuivre, rectangulaires, réparties régulièrement autour de l'arbre 1.

La bande 4 est constituée d'un support en stratifié Epoxy de 0,3 mm d'épaisseur sur lequel est déposée une couche de cuivre de 70 microns d'épaisseur. La couche cuivrée est éliminée partiellement par électroérosion de façon à ne laisser subsister que les surfaces cuivrées 5.

Cette bande 4 est collée sur l'arbre 1 avec les surfaces 5 au voisinage de l'arbre. La colle 6 est choisie pour que la bande 4 ait une bonne tenue mécanique aux efforts tangentiels et centrifuges. On prendra de la colle époxy résistant à l'environnement de l'arbre (eau, huile, température).

La protection des surfaces de cuivre 5 est réalisée par la couche stratifiée 4.

Sur la figure 4, on a représenté la tension électrique obtenue à la sortie du capteur à courants de FOUCAULT dans le cas de l'acier et dans le cas du cuivre en fonction de la distance e entre le métal et le capteur. La courbe de réponse avec du cuivre est nettement au-dessus de la courbe de réponse pour l'acier. Les surfaces de cuivre étant très voisines de l'acier, on peut considérer qu'elles sont à distances voisines du capteur si bien qu'il se produit un saut de tension important lorsque les surfaces cuivrées passent devant le capteur.

La détection de ces sauts de tension réalisée dans un appareillage classique 7, permet de repérer la position de l'arbre 1. On peut ensuite utiliser ce signal notamment pour mesurer l'angle de l'arbre et/ou sa vitesse.

## Revendications

1. Dispositif de repérage de position d'un arbre en acier (1) en rotation comportant un capteur à courants de FOUCAULT devant lequel défile une piste (3) solidaire de l'arbre (1) constituée par une bande (4) en isolant, comportant des surfaces (5) en matière non ferromagnétique avec bonne conductivité électrique, lesdites surfaces (5) étant régulièrement réparties autour de l'arbre (1), la bande (4) étant collée du côté pourvu des surfaces (5) en matière non ferromagnétique sur l'arbre (1) avec les surfaces (5) disposées voisines de l'arbre (1).

2. Dispositif de repérage selon la revendication 1, caractérisé en ce que les surfaces sont (5) en cuivre.

3. Procédé de fabrication d'une piste sur un arbre (1) en acier (3) ayant des surfaces (5) en matière non ferromagnétique, caractérisé en ce qu'on fabrique une bande (4) munie de surfaces (5) en matière non ferromagnétique réparties régulièrement et on colle sur l'arbre (1) cette bande (4)avec les surfaces (5) en matière non ferromagnétique tournées vers l'arbre (1).

## Claims

1. A system for sensing the position of a rotating steel shaft (1), the system comprising an eddy current sensor and a track (3) fixed to the shaft and going past the sensor, the track being constituted by a strip (4) of insulation having areas (5) of non-ferromagnetic material with good electrical conductivity regularly distributed around the shaft (1), the face of the strip (4) provided with areas (5) of non-ferromagnetic material (5) being glued to the shaft (1) with the areas of non-ferromagnetic material (5) disposed adjacent to the shaft (1).

2. A sensing system according to claim 1, characterized in that the areas are made of copper.

3. A method of manufacturing a track (3) having areas (5) of non-ferromagnetic material on a steel shaft (1), the method being characterized in that a strip (4) is made having regularly distributed areas (5) of non-ferromagnetic material, and said strip (4) is glued onto the shaft (1) with the areas (5) of non-ferromagnetic material facing the shaft (1).

## Patentansprüche

1. Vorrichtung zur Bestimmung der Position einer drehenden Stahlwelle (1) mit einer Foucault-Sonde, vor der eine fest mit der Welle (1) verbundene Spur (3) vorbeiläuft, die aus einem Band (4) aus Isoliermaterial besteht, mit Flächenbereichen (5) aus nicht ferromagnetischem Material mit guter elektrischer Leitfähigkeit, wobei diese Flächenbereiche (5) regelmäßig um die Welle (1) verteilt sind und das Band (4) mit der mit die Flächenbereiche (5) aus nicht ferromagnetischem Material aufweisenden Seite auf die Welle (1) geklebt ist, so daß die Flächenbereiche (5) der Welle (1) benachbart angeordnet sind.

2. Vorrichtung nach Anspruch 1, dadurch gekennzeichnet, daß die Flächenbereiche (5) aus Kupfer sind.

3. Verfahren zur Herstellung einer Spur auf einer Welle (1) aus Stahl (3), die Flächenbereiche (5) aus nicht ferromagnetischem Material aufweist, dadurch gekennzeichnet, daß man ein Band (4) herstellt, das mit regelmäßig verteilten Flächenbereichen (5) aus nicht ferromagnetischem Material versehen ist, und daß man auf die Welle (1) dieses Band (4) so klebt, daß die Flächenbereiche (5) aus nicht ferromagnetischem Material zur Welle (1) hin gerichtet sind.
